# EUROPEAN PATENT SPECIFICATION

(11) **EP 3 168 245 B1**
(45) Date of publication and mention of the grant of the patent: **02.01.2019**
(21) Application number: 15818545.4
(22) Date of filing: 01.07.2015
(51) Int. Cl.: C08G 18/00, C08G 18/08, C08G 18/48, C09K 21/14, C08G 18/66, C08K 3/00, C08K 3/30, C08K 3/32, C08G 18/32

(54) **COMPOSITION FOR PRODUCING FIRE-RESISTANT POLYURETHANE FOAM**
ZUSAMMENSETZUNG ZUR HERSTELLUNG EINES FEUERFESTEN POLYURETHANSCHAUMSTOFFES
COMPOSITION POUR PRODUIRE DU POLYURÉTHANNE EXPANSÉ À L'ÉPREUVE DU FEU

(30) Priority: 07.07.2014 RU 2014127615
(43) Date of publication of application: 17.05.2017
(73) Proprietor: Obshchestvo S Ogranichennoy Otvetstvennostyu "Termofasad", Tomsk 634067 (RU); Obshchestvo S Ogranichennoy Otvetstvennostyu Nauchno-Proizvodstvennoe Ob'edinenie "Patriot", Novosibirsk 630008 (RU)
(72) Inventor: KIM, Oleg Petrovich, Tomsk 634041 (RU); KIM, Te Dyun, Novosibirsk 630005 (RU); SALAMATIN, Boris Vladimirovich, Tomsk 634009 (RU)
(74) Representative: Jeck, Anton
(86) International application number: PCT/RU2015/000412
(87) International publication number: WO 2016/007047

(56) References cited:
- DE-B1- 2 936 762
- RU-C2- 2 336 283
- US-A- 3 803 063

## Description

The invention relates to the production of fireproof polyurethane foam from expanded reaction mixture comprised of polyols, polyisocyanate and fireproofing additives (antipyrenes). Such polyurethane foam is used in transportation, aircraft construction and other industries requiring sound and heat insulation materials with high flame resistance.

Polyurethane foam refers to organic flammable materials due to its high-surface area filled with air. This property is appropriate not only for soft flexible open-cell (for 98-99%) polyurethane foams, but also for rigid closed-cell similar ones. To reduce flammability of polyurethane foams, introduction of antipyrenes (fireproofing additives) is normally used. They are usually specially synthesized organic compounds containing chlorine, bromine, aromatic compounds, and phosphate groups in addition. (RU 2006121970; RU 2010143318; RU 2350629; US 2011/0237144; US 2008/0200573; WO 2008/106334; US 2011/0218260.) Synthesis of such compounds is expensive and their application essentially increases the cost of the polyurethane foams production process. In addition, due to substantial presence of organic molecules, such compounds do not always provide fire resistance in amounts meeting required technical specifications for mixture processing.

One of the methods of polyurethane foam production is an application of synergistic effect of intumescent graphite and melamine additives (RU 2040531). However, the mechanism of introduction is quite difficult: the additives are mixed in part of polyol, and amine activator, stabilizer and water are mixed in another part of polyol. So, the filling of polyurethane foam comprises of three components and is technologically inconvenient. Furthermore, the additional introduction of a fireproofing agent is required, so the total amount of additives exceeds 40% of reaction mixture weight and fireproofing effect does not meet the cost.

The patent RU 2336283 C2 is the closest one to the pending patent in terms of technical essence and achieved result and is chosen as a prototype. This patent describes a composition for production of fireproofing polyurethane foam containing a mixture of polyols, polyisocyanate and fireproofing additives. A mixture of expanded graphite, melamine cyanurate and phosphogypsum is used as an additive. The ratio is (1-2):(1-2):1, respectively. The amount of phosphogypsum is 30 to 50 wt. % of the total component amount. Phosphogypsum is a by-product of the phosphoric acid production and exists in the form of solidified wastes, 20 or more meters high. The industrial application of phosphogypsum is limited by the necessity of using special vehicles and mills for waste processing at least to cement state to ensure a balanced filler distribution in the reaction mixture. In such case, the cost of an additive is not low. In addition, phosphogypsum has unstable properties due to differences in content of phosphoric acid residues, sulfuric acid and undecomposed phosphates. It suppresses its processing and may cause a corrosion of metal equipment. It must be noted that the total amount of fireproofing additives and phosphogypsum comprises 40 to 60 wt. % of the total mixture amount. It essentially increases the viscosity of the composition and decreases the foamability and thermal efficiency of products due to much higher density of material (more than 100 kg/m³).

Therefore, the purpose of the invention is a development of relatively inexpensive and accessible fireproofing additives for the composition for the production of the fireproof polyurethane foam.

The technical result of the invention is an essential increase in fireproofing at small amount of fireproofing additives to decrease the density and improve sound and heat insulation properties of the finished product.

To achieve this technical result, the composition contains a mixture of polyols, polyisocyanate and fireproofing additives just as the prototype. As opposed to the prototype, a mixture of ammonium polyphosphate and ammonium sulfamate is used as an additive in amounts of 10 to 40 wt. % of the total component amount, ammonium polyphosphate-ammonium sulfamate mixture ratio is 1:2 to 7:1 weight parts, respectively.

As shown by tests, if the amount of this mixture is less than 10 wt. %, the flammability of samples decreases insignificantly. If the amount of this mixture is up to 40 wt. %, the flammability decreases gradually. If the amount is more than 40 wt. %, the density of samples increases and it destroys heat and sound insulation properties of the polyurethane foam.

The range of a fireproofing component ratio (1:2 to 7:1 weight parts) is based on the properties of components. If the fireproofing additive concentration is minimal and comprises 10%, it must contain more ammonium sulfamate since its fireproofing effect is higher than the effect of ammonium polyphosphate. Therefore, the ammonium sulfamate content must be at least 5% (lower threshold of significant effect) and at most 10% of the reaction mixture total amount (due to the effect of the mixture setting retardation). The optimal amount of ammonium sulfamate comprises 6.5-7% of the reaction mixture total amount. Therefore, the amount of ammonium polyphosphate comprises 3-3.5% of the total amount. The approximate ammonium polyphosphate-ammonium sulfamate ratio is 1:2. Increasing the fireproofing additive amount does not affect the amount of ammonium sulfamate (it remains at 5-6%) and the fireproofing properties are affected by the increasing ammonium polyphosphate amount. If the fireproofing additive amount is at maximum and comprises 40%, the ammonium polyphosphate-ammonium sulfamate ratio is 7:1. It ensures the required fireproofing effect as well as required process characteristics and physical and mechanical properties of the finished product. The examples below illustrate the invention.

Example 1. The mixture is blended from 5 kg of polyisocyanate, 4.5 kg of polyol (ready mix), 0.345 kg of ammonium polyphosphate and 0.720 kg of ammonium sulfamate. The mixture is applied under pressure to an even surface. The composition foams during 10-15 s and solidifies within 5-7 min. Then, the samples are cut off of it. The total fireproofing additive amount comprises 10%, ammonium polyphosphate-ammonium sulfamate mixture ratio is 1:2.03, respectively.

The compositions of examples 2 and 3 are made in the similar manner, but with other component content. Table 1 shows all examples.

| Table 1 | | | |
|---|---|---|---|
| Components | Component content, wt. % | | |
| | Composition for example 1 | Composition for example 2 | Composition for example 3 |
| Polyisocyanate | 48 | 40 | 32 |
| Polyols mixture | 42 | 34 | 28 |
| Ammonium polyphosphate | 3.3 | 20.8 | 35 |
| Ammonium sulfamate | 6.7 | 5.2 | 5 |
| Ammonium polyphosphate-ammonium sulfamate ratio | 1:2.03 | 4:1 | 7:1 |

The flammability of the produced polyurethane foam was estimated according to GOST 12.1.044-89 cl. 4.3 using OTM. The medium density of the material was estimated according to GOST 17177-94. The strength at 10% deformation was estimated according to GOST 17177-94.

Table 2 shows physical and mechanical properties and fireproofing of produced materials. This table also contains data for the sample produced according to the prototype from the known composition containing 40 wt. % of phosphogypsum, obtained using the following components:
- Polyisocyanate - 50 g
- Polypropylene glycol - 30 g
- Water - 1.2 g
- Dimethylethanolamine - 0.3 g
- Glycerin - 4.5 g
- Expanded graphite - 10.7 g
- Phosphogypsum - 71.2 g

| Table 2 | | | | |
|---|---|---|---|---|
| Composition properties | Compositions | | | |
| | 1 | 2 | 3 | Known |
| Density, kg/m³ | 58 | 60 | 65 | 113 |
| Pressure, MPa | 0.28 | 0.32 | 0.36 | 0.43 |
| Fireproof | Fire-resistant | Fire-resistant | Fire-resistant | Fire-resistant |
| Maximum flue gas temperature | 247 | 230 | 205 | 254 |
| Sample weight loss | 57.1 | 52.3 | 48.5 | 55.4 |

As shown by tests, all produced polyurethane foams are fire-resistant. The sample No. 1 with low fireproofing additive content (only 10 wt. % as compared with 40 wt. % in the prototype) has the best fireproofing properties. The sample No. 3 has the same fireproofing additive amount (40 wt. %), but is much more fire-resistant than the prototype which is at its stability limit. In addition, the composition has much lower density (almost twice as much) to ensure better thermal and physical characteristics of the material.

Therefore, the present invention allows us to produce a polyurethane foam with the best fireproofing as well as better test sample weight loss and density.

## Claims

1. The composition for the production of fireproof polyurethane foam containing mixture of polyols, polyisocyanate and fireproofing additives. A mixture of ammonium polyphosphate and ammonium sulfamate is used as additive in amounts of 10 to 40 wt. % of total component amount, ammonium polyphosphate-ammonium sulfamate mixture ratio is 1:2 to 7:1 weight parts, respectively.

## Patentansprüche

1. Zusammensetzung zur Herstellung von feuerfestem Polyurethan-Schaum, der eine Mischung aus Polyolen, Polyisocyanaten und feuerfesten Zusatzstoffen enthält, wobei eine Mischung aus Ammoniumpolyphosphat und Ammoniumsulfanat als Zusatzstoff verwendet wird, und zwar in Mengen von 10-40 Gewichts-% der Gesamtkomponentenmenge, und wobei das Mischungsverhältnis von Ammoniumpolyphosphat zu Ammoniumsulfanat 1:2 bis 7:1 Gewichtsteilen entsprechend beträgt.

## Revendications

1. Composition pour la fabrication de mousse de polyuréthane réfractaire contenant un mélange de polyols, de polyisocyanates et d'additifs réfractaires, dans laquelle un mélange de polyphosphate d'ammonium et de sulfanate d'ammonium est utilisé en tant qu'additif en quantités de 10 à 40% du poids du composant total et dans lequel le rapport du poids du mélange du polyphosphate d'ammonium à l'ammoniumsulfanate est de parties de 1: 2 à 7: 1.
